# EUROPEAN PATENT SPECIFICATION

(11) **EP 1 901 831 B1**
(45) Date of publication and mention of the grant of the patent: **19.12.2012**
(21) Application number: 06753322.4
(22) Date of filing: 29.06.2006
(51) Int. Cl.: B01D 53/79, B01D 53/86, B01D 53/94, C01C 1/00, F01N 5/02, F01N 3/20

(54) **METHOD AND DEVICE FOR SAFE AND CONTROLLED DELIVERY OF AMMONIA FROM A SOLID AMMONIA STORAGE MEDIUM**
VERFAHREN UND VORRICHTUNG ZUR SICHEREN UND KONTROLLIERTEN ZUFUHR VON AMMONIAK AUS EINEM FESTEN AMMONIAKSPEICHERMEDIUM
PROCÉDÉ ET DISPOSITIF POUR LA FOURNITURE SANS DANGER ET CONTRÔLÉE D AMMONIAC À PARTIR D UN SUPPORT DE STOCKAGE D AMMONIAC SOLIDE

(30) Priority: 29.06.2005 DK 200500967
(43) Date of publication of application: 26.03.2008
(73) Proprietor: AMMINEX A/S, 2860 Søborg (DK)
(72) Inventor: JOHANNESSEN, Tue, DK-2600 Glostrup (DK); SORENSEN,Rasmus,Zink, DK-2100 Kopenhagen (DK); CHRISTENSEN, Glaus, Hvid, DK-3540 Lynge (DK); QUAADE, Ulrich, DK-2880 Bagsvaerd (DK); N0RSKOV, Jens K., DK-2840 Hoite (DK)
(74) Representative: Samson & Partner
(86) International application number: PCT/DK2006/000385
(87) International publication number: WO 2007/000170

(56) References cited:
- GB-A- 2 403 165
- US-A- 5 809 775
- US-A- 5 893 267
- US-A1- 2001 042 378
- US-B1- 6 266 955

## Description

### BACKGROUND OF THE INVENTION

### 1. Field of the Invention

This invention relates to the use of metal ammine complexes for storage of ammonia in solid form and a system utilizing the solid storage material for delivery of ammonia by controlled release of ammonia from the material using vacuum as a driving force. Upon release, ammonia may be used as the reducing agent in selective catalytic reduction (SCR) of NOₓ in exhaust gases from combustion processes or as a fuel for a fuel cell.

Other applications using ammonia in mobile or portable units or in special chemical synthesis routes where storage of liquid ammonia is too hazardous are also considered embodiments of the present invention.

### 2. Description of the Related Art

Current environmental regulations necessitate the use of catalysts in the treatment of exhaust gas from automotive vehicles, boilers and furnaces for control of NOₓ emissions. Particularly, vehicles equipped with diesel or other lean burn (gasoline) engines offer the benefit of improved fuel economy, but catalytic reduction of NOₓ using conventional car exhaust catalysts (three-way catalyst) is not feasible because of the high oxygen content in the exhaust gas. Instead, selective catalytic reduction (SCR) has proven useful for achieving the required low levels of NOₓ in the exhaust gas both in stationary and mobile units. In such systems NOₓ is continuously removed from the exhaust gas by injection of a reductant into the exhaust gas prior to entering an SCR catalyst capable of achieving a high conversion of NOₓ.

So far, the most efficient reductant has been ammonia, which is usually introduced into the exhaust gas by controlled injection either of gaseous ammonia (delivered from liquid ammonia stored under pressure), aqueous ammonia or indirectly as urea dissolved in water. In all cases, the amount of reductant being dosed has to be very precisely controlled. Injection of too high amount of reductant will cause a slip of ammonia in the exhaust gas whereas injection of a too small amount of reductant causes a less than optimal conversion of NOₓ.

In many mobile units, the only available technology is to use an aqueous solution of urea as the reductant since in this way potential hazards or safety issues relating to the transport of liquid ammonia are eliminated. However, there are several disadvantages related to the use of aqueous urea as the reductant. First of all, the use of urea solutions requires that a relatively large storage volume is available in order to enable transport sufficient amounts of ammonia. In typical systems, about 30 wt % urea solution is preferred meaning that about 70 wt% of a container holding the urea solution is used only to transport water. During operation the urea solution is sprayed into the exhaust gas, the droplets evaporate and the urea decomposes more or less selectively to ammonia (one molecule of urea forms two molecules of NH₃ and one CO₂) which by mass is roughly 50wt% of ammonia in the urea molecule. Similar concentrations of ammonia can be achieved using aqueous solutions of ammonia as reductant.

Furthermore, for technologies using aqueous solutions a specially designed spray nozzle combined with a precision liquid pump is required to ensure that a) the aqueous urea is delivered to the exhaust system at a desired (and dynamically changing) flow rate and b) that the solution is efficiently dispersed as fine droplets in the gas phase before entering the catalyst. Furthermore, the aqueous solutions might freeze in extreme weather conditions, or the urea solution may simply form precipitates, which might block the dosing system, e.g. the nozzle. Therefore, all lines have to be heated. Furthermore, the decomposition of urea may not proceed as desired. There may be undesired side-reactions giving byproducts in the form of solid deposits of polymers (melamine) and these side reactions also make it difficult to dose a very specific amount of ammonia since the amount of free ammonia released from a given amount of urea can vary according to the decomposition conditions.

Altogether, these difficulties may limit the possibilities of using SCR technology in pollution abatement, particularly in connection with mobile units. To circumvent these difficulties, the present invention devises an alternative method for transporting and dosing ammonia to exhaust gases prior to entering SCR catalyst systems.

As disclosed in applicant's copending application No. WO 2006/012903 metal ammine salts can be used as a solid storage media for ammonia which in turn may be used as the reductant in selective catalytic reduction to reduce NOₓ emissions from automotive vehicles, boilers and furnaces. Thus, the metal-ammine salt constitutes a solid storage medium for ammonia, which represent a safe and practical option for storage and transportation of ammonia. Usually, ammonia is released thermally at a gauge pressure (i.e. above atmospheric pressure) from the preferred metal ammine salt by external heating, see e.g. European Patent No. EP 0 932 440 B1. The metal ammine salt is held in a container from which the released ammonia is dosed through a controllable valve directly into the exhaust gas in the desired proportion. Between the container and the valve, there may be a small buffer volume to increase the controllability of the system.

Useful metal ammine salts have the general formula M(NH₃)ₙX_{z}, where M^{z+} is one or more metal ions capable of binding ammonia (For example M may be Li, Mg, Ca, Sr, V, Cr, Mn, Fe, Co, Ni, Cu, Zn, etc.), n is the coordination number (2-12), and X is one or more anions, where representative examples of X are F, Cl, Br, I, SO₄, MoO₄, PO₄ etc.

During release of ammonia, the original metal-ammine salt M(NH₃)ₙX_{z} is gradually transformed into M(NH₃)ₘX_{z} with *m*<*n.* When all the desired ammonia has been released, the resulting M(NH₃)ₘX_{z} can usually be converted back into M(NH₃)ₙX_{z} by an absorption treatment with an ammonia-containing gas stream.

Typical ammonia contents of the metal ammine complexes are in the range of 20-60 wt%, preferably above 30 wt%. As an example, a typical and inexpensive compound such as Mg(NH₃)₆Cl₂ contains 51.7 wt% ammonia. Another example is Ca(NH₃)₈Cl₂, which contains 55 wt% NH₃. Sr(NH₃)₈Cl₂ has a similar ammonia storage density. Using a compaction method such as the one disclosed In applicant's copending application Nos. WO 2006/081824 and WO 2006/012903 it is demonstrated that it is possible to obtain an ammonia density within few percent from the theoretical maximum storage density of the solid, which gives above 90% of the volumetric capacity of liquid ammonia. This is a preferred unique combination of high density and safety in ammonia handling.

The use of applicant's technology enables storage of ammonia at significantly higher densities (both on a volume and a weight basis) than both aqueous ammonia and aqueous urea solutions. For several metal ammine salts it is possible to release all ammonia and then transform the resulting material back into the original metal ammine salt in a large number of cycles. This obviously constitutes preferred embodiments. Additionally, the ammonia is directly delivered Into the exhaust in the form of ammonia gas, which is an advantage in itself - both for the simplicity of the flow control system and for an efficient mixing of reducing agent, ammonia, with the exhaust gas - but it also eliminates potential difficulties related to blocking of the dosing system because of precipitation or impurities in a liquid-based system.

For mobile units, it is particularly useful to hold the metal ammine in a container that can be easily separated from mobile unit and replaced by a new metal ammine container. In preferred embodiments, the metal ammine containers are recycled and recharged with ammonia in a separate recharging unit or recharging facility.

Usually, ammonia is released from absorbed state by heating the material by electrical resistance In heating elements or by using the heat from e.g. an exhaust gas. In such a process, ammonia is made available and delivered to the desired location by generating a gauge pressure of ammonia by desorption in the storage container in order to control the flow of ammonia through a valve and further on into e.g. an exhaust gas line. When ammonia is thermally desorbed from the solid to generate an elevated ammonia supply pressure, the operating temperature of the desorption process is increased significantly due to the thermodynamic relation between vapour pressure and temperature. Consequently, the system is less safe due to the availability of desorbed ammonia at a pressure above the standard pressure of the surroundings.

US 5,809775 A discloses a method and device for generating ammonia wherein specific NOₓ-reducing agents are pyrolysed. During heating of the NOₓ-reducing agent vacuum can be applied. US 5,289,690 describes a system comprising an apparatus being permanently or selectively installed with a refrigerating or chemical system whereby a gas may be evacuated from the system and adsorbed on a solid adsorbent material, and later desorbed and returned to the system.

The present invention offers a simple solution for overcoming the drawbacks of the prior art and enables operation of a unit for absorbing/desorbing ammonia in a more safe manner at lower operating temperature and pressure as appears from the below.

### SUMMARY OF THE INVENTION

The present invention relates to a method of controlled provision of ammonia with the acid of vacuum as defined in claim 1.

In a second aspect the Invention relates to a device for providing ammonia according to a specific embodiment of the above method for a selective catalytic reduction of NOx in an oxygen-containing exhaust gas of a combustion engine or combustion process by using gaseous ammonia and a reduction catalyst as defined in claim 13.

In a third aspect, the invention relates to the use of a vacuum pump for performing the above method as defined in claim 15.

### Brief Description of the Drawings

The Invention is disclosed more In detail with reference to the drawings in which
figure 1 schematically shows an embodiment of a system according to the invention,
figure 2 schematically shows another embodiment of a system according to the invention,
figure 3 schematically shows a third embodiment of a system according to the invention,
figure 4 schematically shows a forth embodiment of a system according to the invention,
figure 5 schematically shows a fifth embodiment of a system according to the invention,
figure 6 schematically shows a sixth embodiment of a system according to the invention, and
figure 7 schematically shows a seventh embodiment of a system according to the invention,

### Detailed Description of the Present invention

The present invention relates to a method of controlled provision of ammonia as defined above.

Ammonia can e.g: be stored safely and efficiently as a solid material - more specifically as metal ammine complexes of the general formula Mₐ(NH₃)ₙX_{z}, wherein M is one or more cations selected from alkaline earth metals such as Mg, Ca or Sr, and/or one or more transition metal ions, such as Mn, Fe, Co, Ni, Cu, and/or Zn, X is one or more anions, a is the number of cations per salt molecule, z is the number of anions per salt molecule, and n is the coordination number of 2 to 12. Such complexes have well-defined absorption and desorption characteristics. From a saturated or partly saturated metal ammine salt, there is a given equilibrium pressure of ammonia above the solid as a function of temperature. Ammonia can be released by heating the material to a temperature resulting in a desorption pressure of ammonia, which is higher than the (partial) pressure of ammonia in the gas phase.

According to the present invention, storage and delivery is made even more safe and versatile by using a vacuum pump to facilitate the release of ammonia from the storage material. Thereby, the storage container is maintained at a lower pressure and a lower temperature and in case of an accident there will be almost no leak of ammonia since a hole in the container will result in gas from the surroundings flowing into the low-pressure container in stead of ammonia leaking out of a heated container with a gauge pressure of ammonia. After desorption controlled by the low-pressure state in the container, ammonia is dosed into the desired location/process/fluid/gas by controlling a flow of ammonia from the container - through an optional buffer volume - using an adjustable valve.

Using vacuum as the driving force for ammonia desorption from the storage material reduces the operating temperature of the system since it is not necessary to operate the storage/desorption container at the temperature where the material would release all ammonia under an elevated ammonia pressure.

In applicant's co-pending applications WO 2006/012903 and PCT/DK 2006/000059 is disclosed methods and devices for ammonia storage and delivery using compacted metal ammine salts. According to these applications the use of a solid storage material with a low equilibrium pressure of ammonia (preferably below 0.1 bar at room temperature) gives superior safety of the storage method. Using the method of compaction, the saturated material into e.g. dense rods gives a very high ammonia density compared to e.g. granulated material. The ammonia densities in such compacted structures give an ammonia density above 90% of the volumetric ammonia density of liquid ammonia.

In accordance with the present invention, the method of delivery is made even more safe and versatile by using a vacuum pump to effect release of ammonia from the storage material into a (facultative) small buffer volume with a moderate pressure, e.g. 0.5-3 bar. Ammonia is then dosed into the desired process or fluid/gas by controlling a flow of ammonia from the buffer volume using an adjustable valve such as a reduction valve.

Using Mg(NH₃)₆Cl₂ as on example of a material where the present invention would be useful, the operating conditions are changed substantially. A normal thermally driven desorption of.ammonia into a container (and optional buffer volume) with a pressure of e.g. 2 bar would require an operating temperature of the desorption unit of approximately 675 K in order to drive out al ammonia from the storage material. Reducing the pressure in the storage container to e.g. 0.01 bar, ammonia will forcibly be desorbed from the storage material much closer to room temperature. All ammonia is released using a reduced operating temperature of 500K, i.e. a reduction of almost 200K. If the pressure of 0.001 bar in the storage unit is used, the operating temperature is further reduced to 450K. This is summarized in table 1.

**Table 1: Operating temperature as a function of pressure level in the storage/delivery unit. The data shown in Table 1 are for Mg(NH₃)₆Cl₂. Similar trends are found for all other metal amine salts, e.g. SrCl₂- or CaCl₂-based storage material. For comparison, the operating temperature is shown for the case where the driving force for getting ammonia out is by thermal desorption; generating a pressure of 2 bar in the storage/delivery unit.**

| Pressure level in storage container (bar) | Approximate operating temperature of storage container in order to release ammonia |
|---|---|
| 0.5 | 640K |
| 0.1 | 560K |
| 0.01 | 500K |
| 0.001 | 450K |
| 2 | 680K |

The overall considerations of the present invention are as follows:
- The driving force for getting ammonia out of the storage material
   ○ is not provided from thermal desorption using heat to provide a gauge Pressure of ammonia above the level of the surroundings.
   ○ but is provided from generating vacuum (reduced pressure) in the storage container using a pump and thus pumping ammonia from the storage unit into a small buffer volume from which a controlled ammonia delivery is made through an adjustable valve.
- Suitable kinetics of the vacuum-driven desorption process are obtained when the unit is maintained at a given temperature. For Mg(NH₃)₆Cl₂, the operating temperature is suitably in the range of 273-560K For Ca(NH₃)₈Cl₂ and Sr(NH₃)₈Cl₂ the operating temperature is suitably in at a given level by means of heating since desorption of ammonia is endothermic. Thus, optional heating may compensate for a drop of temperature of the storage container during desorption of ammonia, which is controlled by the pump.
- The present invention enhances the safety of the storage/delivery system since the storage container is not operated a pressure above the level of the surroundings (i.e. atmospheric pressure). During e.g. an accident, a crack in the storage container would not result in a sudden release of an amount of gaseous ammonia since the container is operated at an absolute pressure below 1 bar. Contrary, the container would take up air from the surroundings up to a pressure of roughly 1 bar and additionally the humidity from the surrounding air would passivate the surface of the metal ammine salt thus slowing down any potential release of ammonia from the material.
- The start-up and termination of the ammonia release is made faster since the driving force (reduced pressure) can be obtained faster than an initial heating step of the thermal desorption process e.g. of WO 99/01205 or WO 2006/012903.

The present invention is useful in any system requiring safe and controlled delivery/dosing of ammonia from a high-density solid storage material containing ammonia. The invention is useful both as a general method but also specifically for devices based on ammonia delivery from a solid ammonia storage medium, where the driving force for ammonia release is reduced pressure/vacuum.

The invention is useful for different kinds of formulated solid forms of ammonia storage materials, e.g. solid rods/cylinders/blocks with low porosity and also for granulated storage material with a porosity generated from the loss in packing density due to the space between the individual granules.

The present invention is particular useful in the controlled delivery of ammonia to an exhaust gas containing NOx for the purpose of removing NOx by the well-known selective catalytic reduction (SCR) process.

The present invention is furthermore useful for both mobile and stationary SCR-applications but is considered particularly useful in the delivery of ammonia for automobiles, trucks and ships fuelled on diesel or using lean-burn gasoline or even for ammonia or hydrogen-fuelled engines.

The present invention is also useful for delivery of ammonia to solid oxide fuel cells (SOFC), which can operate on a number of fuels, e.g. hydrogen, methane but also directly on gaseous ammonia. It is also useful for the delivery of ammonia to an integrated ammonia decomposition unit for the production of hydrogen, which subsequently may be used as fuel in a PEM Fuel Cell, an alkaline fuel cell or a molten carbonate fuel cell.

In a preferred embodiment of the invention, a given mass of storage material capable of binding ammonia by absorption is present in a container with a small vacuum pump connected to it. When the vacuum pump is active it generates a reduced gas-phase pressure of ammonia inside the container and when the pressure has reached a level, which is below the thermodynamic equilibrium of ammonia desorption from the storage material, there will be a driving force for ammonia desorption into the gas phase solely controlled by a pressure gradient and not by an increase in desorption pressure as a result of heating.

In another preferred embodiment, the ammonia storage material is fully saturated with ammonia before the material is placed inside the storage container.

When ammonia is desorbed from the solid controlled by the pressure gradient, the enthalpy of desorption may cause the material to cool down as the desorption proceeds. In a situation of extremely efficient thermal insulation or very high desorption rates, this drop in temperature will result in a corresponding reduction in equilibrium vapour pressure of the desorption process and eventually the desorption pressure will be equal to the pressure level in the container controlled by the vacuum pump. At this point in time, desorption will terminate. Therefore, an embodiment of the invention involves means of maintaining the storage container at a constant temperature level thus compensating for the cooling effect of the desorption process. A preferred method of heat compensation is by well-known electric resistive heating or using heat generated in a chemical process. Another preferred method is to allow for thermal equilibration between the storage container and its surroundings. This is preferred if the operating temperature of the container is designed to be near room temperature. Yet another preferred method of heat compensation is to use waste heat from a combustion process such as the waste heat from the exhaust gas of an automotive unit such as a diesel or gasoline engine exhaust gas. Such an engine may e.g. be operating on gasoline, diesel or other hydro-carbon fuels such as ethanol or on synthetic fuel such as ammonia or hydrogen.

In a preferred embodiment of the invention, the solid ammonia storage material is a metal ammine complex capable of binding ammonia by absorption into the crystal lattice of the inorganic salt. Such salts are of the general formula: Mₐ(NH₃)ₙX_{z}, wherein M is one or more cations selected from alkali metals such as Li, Na, K or Cs, alkaline earth metals such as Mg, Ca or Sr, and/or transition metals such as V, Cr, Mn, Fe, Co, Ni, Cu, or Zn or combinations thereof such as NaAl, KAl, K₂Zn, CsCu, or K₂Fe, X is one or more anions selected from fluoride, chloride, bromide, iodide, nitrate, thiocyanate, sulphate, molybdate, and phosphate ions, a is the number of cations per salt molecule, z is the number of anions per salt molecule, and n is the coordination number of 2 to 12,

Choice of preferred salts will depend of the desired operating temperature and degree of safety. One preferred choice of salt complex could be based on CaCl₂, where the fully saturated compound is Ca(NH₃)₈Cl₂. The vapour pressure of ammonia at room temperature is approximately 0.5 bar and in such an embodiment, a vacuum pump could release ammonia at a temperature of the surroundings by reducing the pressure inside the container to below 0.5 bar. Operating temperature may be maintained simply by normal thermal equilibrium between the container and its surroundings or it may be maintained by electrical heating, exhaust gas heat or by circulating engine coolant around the container. Another compound with the same range of ammonia desorption pressure (0.8 bar) at room temperature is Sr(NH₃)₆Cl₂.

Another preferred embodiment - with a higher degree of safety involved - is based on MgCl₂ (with Mg(NH₃)₆Cl₂ in saturated form). The vapour pressure at room temperature is as low as 0.002 bar and establishment of a vacuum below 0.002 bar would have to be obtained in order to facilitate ammonia desorption at room temperature but suitable desorption kinetics may be obtained at slightly a higher temperature as already seen from table 1. There is a dramatic change in operating temperature when vacuum is applied as opposed to thermally activated desorption delivering ammonia at a gauge pressure.

In a preferred embodiment of the method of the invention the ionic salt is MgCl₂, CaCl₂, SrCl₂ or mixtures thereof.

A particularly preferred embodiment of the invention is related to applicants own co-pending invention (WO 2006/081824) according to which very high storage capacities are obtained when the saturated storage material is processed from a low-density powder to a high-density, shaped solid with almost no internal pore volume. It is particularly advantageous to use the high-density storage capacity of WO 2006/081824 in combination with the method of ammonia desorption of the present invention.

Thus, it is preferred that the saturated ammonia containing material is compacted to a dense block, rod, cylinder, ring or edged unit such as cube with a density above 70% of the theoretical maximum skeleton density of the saturated solid material before placing in the container.

Yet another preferred embodiment uses a control of the vacuum pump to control the desorption rate of ammonia from the solid. The desorption process can be rapidly terminated by shutting down the vacuum pump and similarly, fast start-up can be made by activating the vacuum pump. In such embodiments, there will be further components in the total system, i.e. fittings, control valves, an optional buffer volume, reduction valve etc.

The present invention Is particularly advantageous as an ammonia storage/delivery technology for selective catalytic reduction of NOx from e.g. a combustion process or more directly an engine. In such an embodiment, the system would comply of storage material, vacuum pump, optional means for heating (compensation of desorption heat) and a control valve for accurate dosing of ammonia to the NOx-containing exhaust. The system would also involve a catalyst for converting NOx and NH to nitrogen (N₂) and water.

As on-board storage of ammonia as the reductant for DeNOx, the present is particularly advantageous for NOx-aftertreatment in exhaust of diesel and lean-burn gasoline vehicles or stationary engines such as power generators. These engines and/or combustion process may be fuelled by a range of fuels such as diesel, gasoline, natural gas or other fossil fuels or a bio-fuel (methane, ethane, methanol, ethanol or similar) and even ammonia and hydrogen.

The present invention is particularly advantageous for DeNOx-technology on passenger automobiles, trucks, ships, trains, small/medium generators and even power plants.

In a preferred embodiment the released ammonia is used in NOx emission reduction from stationary or mobile combustion engines fuelled by methanol, ethanol, hydrogen, methane, ethane or any other bio- or synthetic fuel such as ammonia and hydrogen

The method is thus suitable for methods wherein the released ammonia is used in NOx emission reduction from stationary or mobile power plants fuelled by coal, natural gas, oil or any other fossil fuels.

The present invention is generally applicable in methods and systems where safe storage of ammonia is made feasible by the controlled release technology controlled by the active vacuum pumping and the corresponding heat-compensation to maintain a suitable kinetics of the process. Ammonia made available in such an embodiment may have a range of other applications such as ammonia supply to remote and/or small chemical synthesis process involving ammonia. Such processes may also be related to power generation where ammonia is an indirect fuel as a source for hydrogen for a hydrogen-fuelled fuel cell or by direct ammonia feed to a fuel cell capable of running directly on ammonia (e.g. a solid oxide fuel cell).

In a second aspect the invention relates to a device for providing ammonia for a selective catalytic reduction of NOx in an oxygen-containing exhaust gas of a combustion engine or combustion process by using gaseous ammonia and a reduction catalyst as defined above.

Such a device is very suitable for use for reduction of NOₓ according to the method of the invention when applied to automobiles, trucks, trains, ships or any other motorized machine.

Furthermore, such a device is very suitable for use for reduction of NOₓ according to the method of the invention when applied to power plants generating electricity.

In a third aspect the invention relates to the use of a vacuum pump for performing the method of the invention.

In a preferred embodiment, the container further comprises means for heating said storage container in order to compensate for the drop in temperature caused by the ammonia desorption process thereby maintaining the container at a desired operating temperature.

In one embodiment of the use according to the invention, the released ammonia is used as fuel in an ammonia-fuelled fuel cell.

In another embodiment of the use according to the invention, the released ammonia is fed to an ammonia decomposition reactor wherein ammonia is decomposed to nitrogen and hydrogen, and at least the hydrogen is used as fuel in a hydrogen-fuelled fuel cell.

### Description of preferred embodiments

The invention is now explained more in detail with reference to the drawings showing preferred embodiments of the invention.

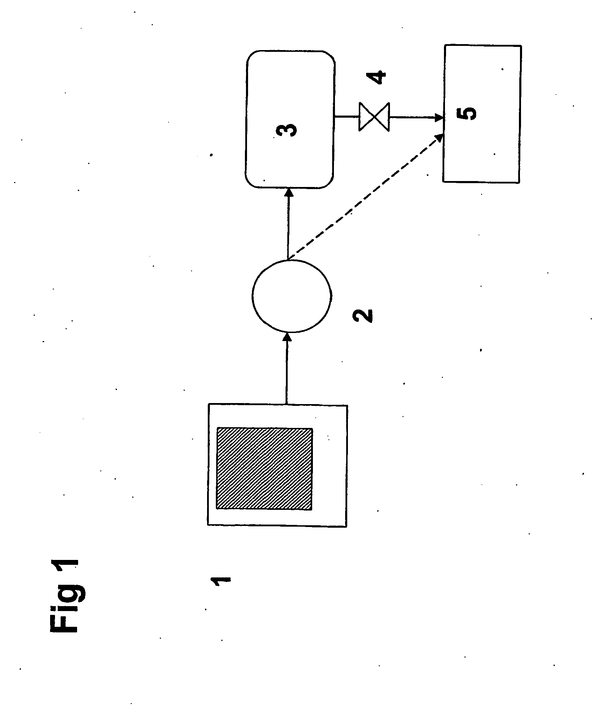

Reference is made to figure 1 which schematically shows a system according to the invention comprising a storage unit (**1**) containing an ammonia storage material, preferably being a compacted metal ammine salt shown as a hatched unit, which system is operated at a reduced pressure using a vacuum pump (**2**). The pump draws ammonia from the storage material and delivers ammonia into a buffer volume (**3**) and ammonia is subsequently delivered to a consumer (**5**) such as a process or an ammonia consuming unit which has a need of a supply of ammonia through a dosing valve (**4**). Ammonia can alternatively be delivered directly from the pump (**2**) to the consumer (**5**) as indicated by the dotted line.

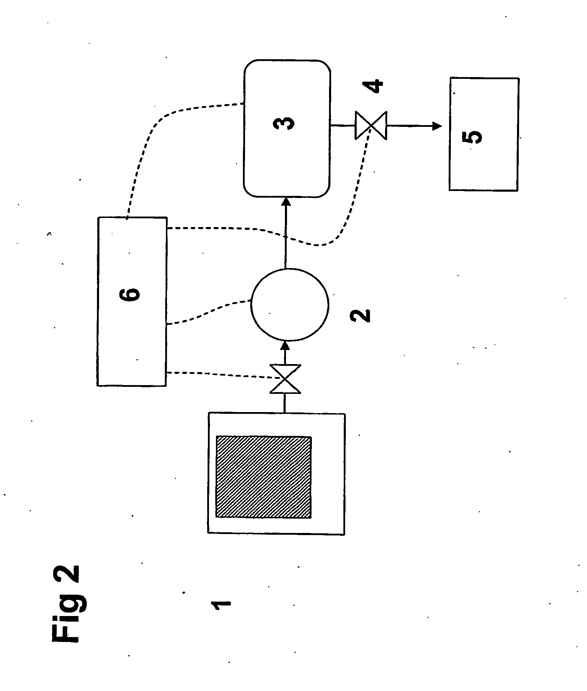

In the embodiment shown in figure 2 a storage unit (**1**) containing an ammonia storage material, preferably being a compacted metal ammine salt shown as a hatched unit, is operated at a reduced pressure using a vacuum pump (**2**). The pump delivers ammonia into a buffer volume (**3**) and ammonia is subsequently delivered to a consumer (**5**) through a dosing valve (4). Ammonia can also be delivered directly from the pump (**2**) to the consumer (**5**). The entire dosing system is monitored and/or controlled by a controller (**6**).

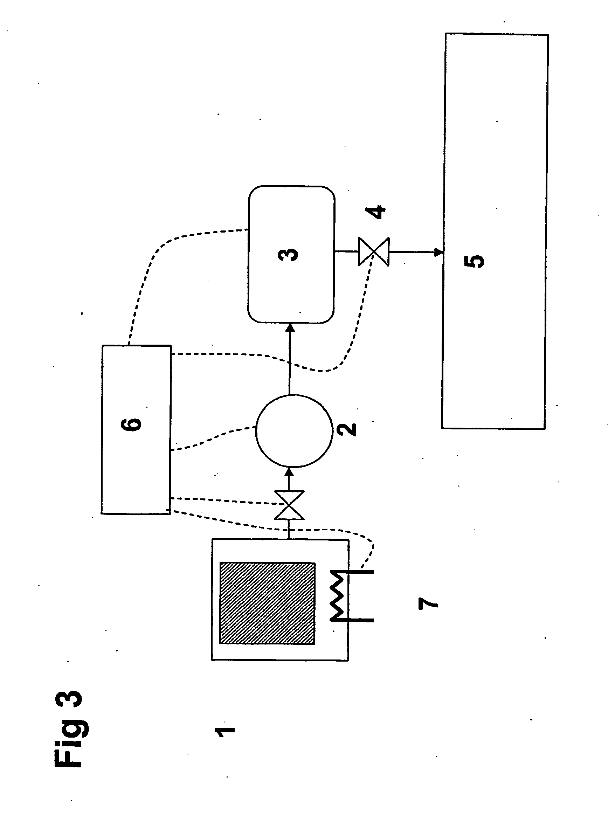

In the embodiment shown in figure 3 a storage unit (**1**) containing an ammonia storage material, preferably being a compacted metal ammine salt shown as a hatched unit, is operated at a reduced pressure using a vacuum pump (**2**). The pump delivers ammonia into a buffer volume (**3**) and ammonia is subsequently delivered to a consumer (**5**) through a dosing valve (**4**). Ammonia can also be delivered directly from the pump (**2**) to the consumer (**5**). The entire dosing system is monitored and/or controlled by a controller (**6**). The heat, which is necessary to maintain a given operating temperature, i.e. to compensate for the endothermic desorption of ammonia controlled by the vacuum pump (**2**), is supplied to the unit (**1**) through a heater (**7**). The heat can be provided by electrical heating or by heat produced in a separate process step or unit, e.g. an engine or a fuel cell. The heat compensating for ammonia desorption may also be provided by normal thermal equilibration between the container (1) and the surroundings.

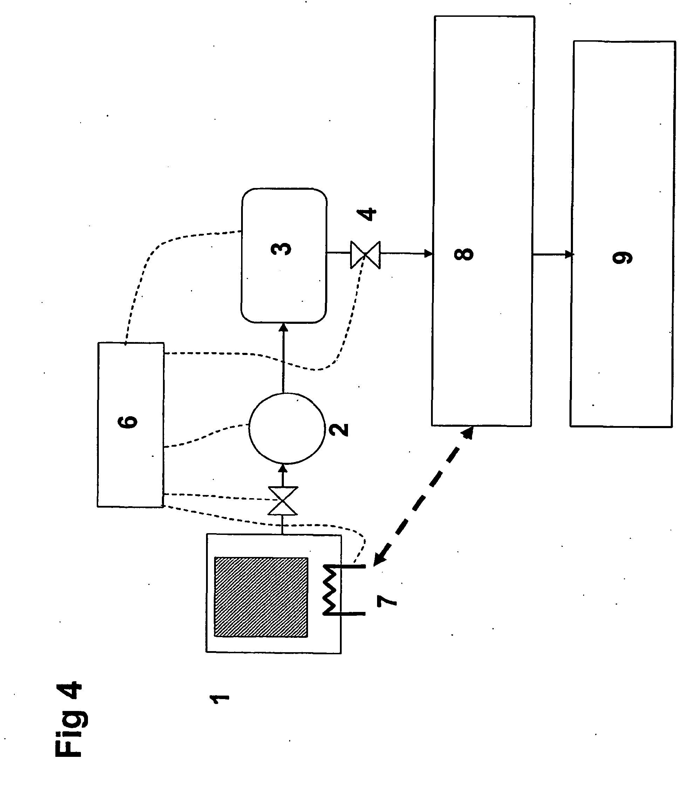

Figure 4 shows an embodiment of a device for controlled delivery of ammonia to the exhaust gas of a combustion process. A storage unit (**1**) containing an ammonia storage material, preferably being a compacted metal ammine salt shown as a hatched unit, is operated at a reduced pressure using a vacuum pump (**2**). The pump delivers ammonia into a buffer volume (**3**) and ammonia is subsequently delivered, through a dosing valve (**4**), to a conduit carrying an exhaust gas (**8**) containing NOₓ form a mobile or stationary combustion process or engine, wherein the gas mixture is passed through a SCR (Selective Catalytic Reduction) DeNOx catalyst (**9**). Ammonia can also be delivered directly from the pump (**2**) to the exhaust gas conduit (**8**). The entire dosing system is monitored and/or controlled by a controller (**6**). A heater (**7**) supplies heat which is necessary to maintain a given operating temperature, i.e. to compensate for the endothermic release of ammonia controlled by the vacuum pump (**2**), to the unit (**1**). The heat can be provided by electrical heating or in the form of waste heat from a separate process step, e.g. an engine or a combustion process. As indicated by the dotted arrow, it may also be provided from the exhaust gas (**8**) to the container (**1**). The heater (7) in figure 4 may be redundant if the operating temperature of the container (1) is close to the temperature of the surroundings.

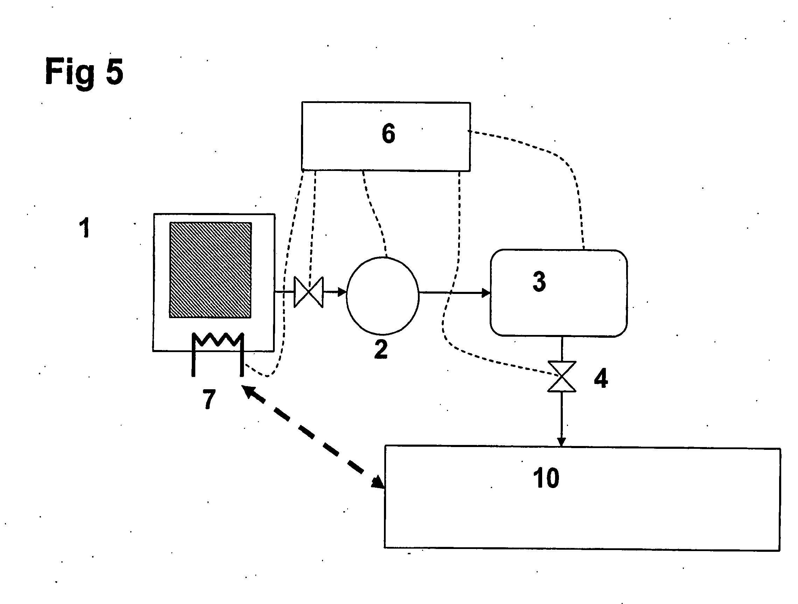

Figure 5 shows an embodiment of a device for controlled delivery of ammonia to an ammonia-fuelled fuel cell. A storage unit (**1**) containing an ammonia storage material, preferably being a compacted metal ammine salt shown as a hatched unit, is operated at a reduced pressure using a vacuum pump (**2**). The pump delivers ammonia into a buffer volume (**3**) and ammonia is subsequently delivered to an ammonia-fuelled fuel cell (**10**) through a dosing valve (**4**). Ammonia can also be delivered directly from the pump (**2**) to the fuel cell (**10**). The entire dosing system is monitored and/or controlled by a controller (**6**). A heater (**7**) supplies heat which is necessary to maintain a given operating temperature, i.e. to compensate for the endothermic desorption of ammonia controlled by the vacuum pump (**2**), to the unit (**1**). The heat can be provided by electrical heating or in the form of waste heat from a separate process step, e.g. the fuel cell (**8**) as indicated by the dotted line. The heat compensating for ammonia desorption may also be provided by normal thermal equilibration between the container (**1**) and the surroundings.

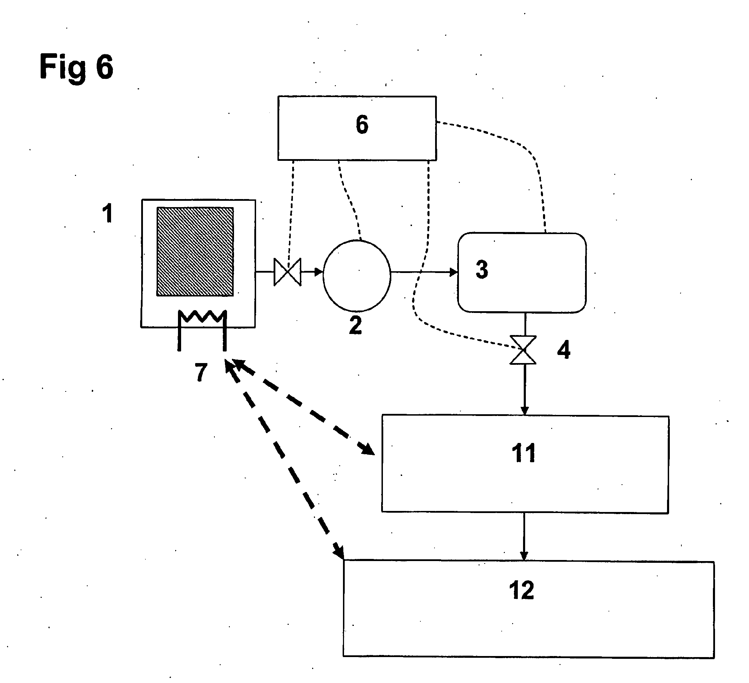

Figure 6 shows an embodiment of a device according to the invention for controlled delivery of ammonia to a hydrogen-fuelled fuel cell through a reactor decomposing ammonia into nitrogen and hydrogen. A storage unit (**1**) containing an ammonia storage material, preferably being a compacted metal ammine salt shown as a hatched unit (**1**) is operated at a reduced pressure using a vacuum pump (**2**). The pump delivers ammonia into a buffer volume (**3**) and ammonia is delivered to an ammonia decomposition reactor (**11**) through a dosing valve (**4**). In the ammonia decomposition reactor (**11**), ammonia is decomposed into hydrogen and nitrogen, which is delivered to the hydrogen fuelled fuel cell (**12**). The entire dosing system is monitored and/or controlled by a controller (**6**). The heat (**7**), which is necessary to maintain a given operating temperature, i.e. to compensate for the endothermic desorption of ammonia controlled by the vacuum pump (**2**), is supplied to the unit (**1**) through a heater. The heat can be provided by electrical heating or by waste heat from a separate process step, e.g. the fuel cell (**12**) or the ammonia decomposition reactor (**11**) as indicated by the dotted lines. The heat compensating for ammonia desorption may also be provided by normal thermal equilibration between the container (**1**) and the surroundings.

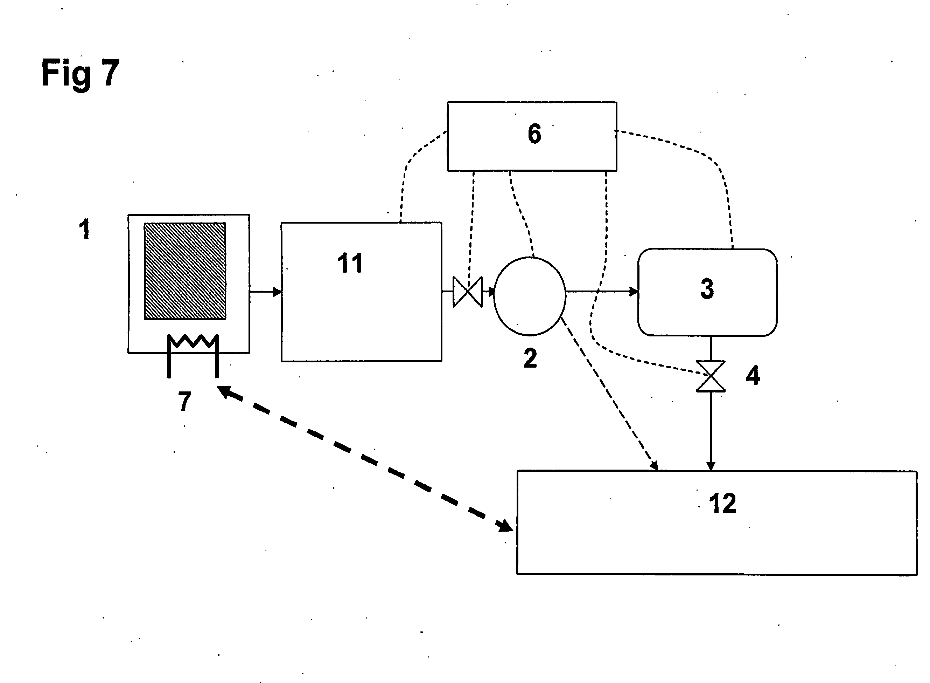

Figure 7 shows another embodiment of a device according to the invention for controlled delivery of ammonia to a hydrogen-fuelled fuel cell through a reactor decomposing ammonia into nitrogen and hydrogen. A storage unit (**1**) containing an ammonia storage material, preferably being a compacted metal ammine salt, is operated at a reduced pressure using a vacuum pump (**2**). The pump withdraws ammonia from the storage unit (**1**) through an ammonia decomposition reactor (**11**) and delivers hydrogen and nitrogen into a buffer volume (**3**), and hydrogen is subsequently delivered to the hydrogen-fuelled fuel cell (**12**) through a dosing valve (**4**). Hydrogen - generated in the reactor (**11**) - can alternatively be delivered directly from the pump (**2**) to the fuel cell (**12**) as indicated by the dotted line. The entire dosing system is monitored and/or controlled by a controller (**6**). A heater (**7**) supplied heat which is necessary to maintain a given operating temperature, i.e. to compensate for the endothermic release of ammonia controlled by the vacuum pump (**2**), to the unit (**1**). The heat can be provided by electrical heating or in the form of waste heat from a separate process step, e.g. the fuel cell (**12**). The heat compensating for ammonia desorption may also be provided by normal thermal equilibration between the container (1) and the surroundings. The advantage of the embodiment shown in figure 7 as compared to the embodiment shown in figure 6 is that a low pressure in both the storage delivery unit (1) and the decomposition reactor (**9**) during operation is advantageous for the equilibrium-limited decomposition of ammonia.

## Claims

1. A method of controlled provision of ammonia with the aid of vacuum, wherein said method comprises the steps of:
(a) providing a container (1);
(b) placing in said container (1) a solid metal ammine salt containing absorbed ammonia and being capable of storing/delivering ammonia by binding ammonia by absorption and forcibly desorbing ammonia by reducing the pressure, respectively; and
(c) effecting ammonia release by desorption using a vacuum pump (2) to reach an ammonia gas phase pressure in said container (1), which is below the corresponding thermodynamic equilibrium ammonia pressure of the solid at the operating temperature of the container (1);
**characterized by** any one of the steps of:
using the released ammonia in selective catalytic reduction of NOx (9) in exhaust gases (8) from combustion processes or
feeding the released ammonia to an ammonia-fuelled fuel cell as fuel or to an ammonia decomposition reactor (11) wherein ammonia is decomposed to nitrogen and hydrogen, and at least the hydrogen is fed to a hydrogen-fuelled fuel cell (10,12) as fuel.

2. A method according to claim 1, wherein the ammonia-containing metal ammine salt is saturated with ammonia.

3. A method according to claims 1 or 2, wherein the cooling effect of the ammonia desorption process is balanced by providing heat to the content of the container (1).

4. A method according to any of claims 1-3, wherein the drop in temperature of the metal ammine salt caused by the ammonia desorption process is balanced by providing heat from electric resistance heater (7) or heat from a chemical process.

5. A method according to any of claims 1-3, wherein the drop in temperature of the metal ammine salt caused by the ammonia desorption process is balanced by providing heat in the form of waste heat from an exhaust gas from a combustion process.

6. A method according to claim 5, wherein the drop in temperature of the metal ammine salt caused by the ammonia desorption process is balanced by providing heat from the exhaust gas of an automotive unit operating on gasoline, diesel or other hydrocarbon fuels such as ethanol or on synthetic fuel such as ammonia or hydrogen.

7. A method according to claim 1, wherein the metal ammine salt is a salt of the general formula: Mₐ(NH₃)ₙX_{z}, wherein M is one or more cations selected from alkali metals such as Li, Na, K or Cs, alkaline earth metals such as Mg, Ca or Sr, and/or transition metals such as V, Cr, Mn, Fe, Co, Ni, Cu, or Zn or combinations thereof such as NaAl, KAl, K₂Zn, CsCu, or K₂Fe, X is one or more anions selected from fluoride, chloride, bromide, iodide, nitrate, thiocyanate, sulphate, molybdate, and phosphate ions, a is the number of cations per salt molecule, z is the number of anions per salt molecule, and n is the coordination number of 2 to 12.

8. A method according to claim 7, wherein the ionic salt is MgCl₂, CaCl₂, SrCl₂ or mixtures thereof.

9. A method according to any of claims 1-9, wherein the saturated ammonia-containing metal ammine salt is in solid form compacted to a dense block, rod, cylinder, ring or edged unit such as cube with a density above 70% of the theoretical maximum skeleton density of the saturated solid metal ammine salt before placing in the container.

10. A method according to any of claims 1-9, wherein the release rate of ammonia is determined by the established level of vacuum inside the container, which, in turn, is controlled by the vacuum pump.

11. A method according to any of claims 1-10, wherein the delivery of ammonia is further controlled by reduction valves, flow controllers, valves or similar type of equipment.

12. A method according to claim 1, wherein the released ammonia is used in selective catalytic reduction of NOx (9) in exhaust gases (8) from combustion processes in stationary and mobile combustion engines fuelled by diesel, petrol, natural gas or any other fossil fuels or by methanol, ethanol, hydrogen, methane, ethane or any other bio- or synthetic fuel such as ammonia and hydrogen, or in stationary or mobile power plants fuelled by coal, natural gas, oil or any other fossil fuels.

13. A device for providing ammonia according to the method of claim 1 for a selective catalytic reduction of NOx (9) in an oxygen-containing exhaust gas of a combustion engine or combustion process by using gaseous ammonia and a reduction catalyst, said the device comprising:
(a) a container (1) with a solid metal ammine salt containing absorbed ammonia and being capable of storing/delivering ammonia by binding ammonia by absorption and forcibly desorbing ammonia by reducing the pressure, respectively;
(b) a vacuum pump (2) for generating a reduced pressure of gas-phase ammonia in the container, which is below the corresponding equilibrium ammonia pressure of the solid at the operating temperature (1) of the container, thereby effecting ammonia release by desorption;
c) optional means (7) for heating the contents of the container in order to compensate for the drop in temperature caused by the ammonia desorption process thereby maintaining a desired operating temperature;
**characterized in that** the device further comprises:
(d) means (4) for introducing gaseous ammonia from the container (1) into an exhaust gas (8);
(e) a catalyst for reducing NOx (9) by reaction with the dosed ammonia, and
(f) means for controlling (6) the amount of ammonia introduced into the exhaust line
(f1) of an engine, depending on the operating conditions of the engine, and to give an optimal ratio between NOx and ammonia in order to obtain high NOₓ conversion while minimizing ammonia slip from the gas down-stream from catalyst, or
(f2) of stationary or mobile power plants generating electricity.

14. A device according to claim 13 for use for reduction of NOₓ (9) according to the method of claim 1 wherein the engine is present in automobiles, trucks, trains, ships or any other motorized machine.

15. Use of a vacuum pump (2) for performing the method of claim 1.

16. Use as claimed in claim 15, wherein heat is provided to said storage container (1) in order to compensate for the drop in temperature caused by the ammonia desorption process thereby maintaining the container (1) at a desired operating temperature.

17. Use as claimed in claim 15 or 16, wherein the released ammonia is used as fuel in an ammonia-fuelled fuel cell (10, 12).

18. Use as claimed in claim 15 or 16, wherein the released ammonia is fed to an ammonia decomposition reactor (11) wherein ammonia is decomposed to nitrogen and hydrogen, and at least the hydrogen is used as fuel in a hydrogen-fuelled fuel cell (10, 12).

## Patentansprüche

1. Verfahren zur gesteuerten Bereitstellung von Ammoniak mit Hilfe von Vakuum, wobei das Verfahren die Schritte umfasst:
(a) Bereitstellen eines Behälters (1);
(b) Anordnen eines festen Metallammin-Salzes, das absorbiertes Ammoniak enthält und Ammoniak durch Binden von Ammoniak mittels Absorption bzw. erzwungenes Desorbieren von Ammoniak durch Verringerung des Drucks speichern/liefern kann, in den Behälter (1); und
(c) Bewirken der Freisetzung von Ammoniak durch Desorption unter Verwendung einer Vakuumpumpe (2), um einen Ammoniak-Gasphasendruck in dem Behälter (1) zu erreichen, der unterhalb des entsprechenden thermodynamischen Ammoniak-Gleichgewichtsdrucks bei der Betriebstemperatur des Behälters (1) liegt,
**gekennzeichnet durch** einen beliebigen der Schritte:
Verwenden des freigesetzten Ammoniak bei der selektiven katalytischen Reduktion von NOx (9) in Abgasen (8) aus Verbrennungsprozessen oder
Einspeisen des freigesetzten Ammoniaks in eine mit Ammoniak betriebene Brennstoffzelle als Brennstoff oder in einen Ammoniak-Zersetzungsreaktor (11), in dem Ammoniak in Stickstoff und Wasserstoff zersetzt wird und zumindest der Wasserstoff in eine mit Wasserstoff betriebene Brennstoffzelle (10, 12) als Brennstoff eingespeist wird.

2. Verfahren nach Anspruch 1, bei dem das ammoniakhaltige Metallammin-Salz mit Ammoniak gesättigt ist.

3. Verfahren nach Anspruch 1 oder 2, bei dem die Kühlwirkung des Ammoniak-Desorptionsprozesses durch Bereitstellung von Wärme für den Inhalt des Behälters (1) ausgeglichen wird.

4. Verfahren nach irgendeinem der Ansprüche 1 - 3, bei dem der Temperaturabfall des Metallammin-Salzes, der durch den Ammoniak-Desorptionsprozess verursacht wird, durch Bereitstellung von Wärme aus einer elektrischen Widerstandsheizung (7) oder Wärme aus einem chemischen Prozess ausgeglichen wird.

5. Verfahren nach irgendeinem der Ansprüche 1 - 3, bei dem der Temperaturabfall des Metallammin-Salzes, der durch den Ammoniak-Desorptionsprozess verursacht wird, durch Bereitstellung von Wärme in Form von Abwärme aus einem Abgas aus einem Verbrennungsprozess ausgeglichen wird.

6. Verfahren nach Anspruch 5, bei dem der Temperaturabfall des Metallammin-Salzes, der durch den Ammoniak-Desorptionsprozess verursacht wird, durch Bereitstellung von Wärme aus dem Abgas einer Automobileinheit, die mittels Benzin, Diesel oder anderer Kohlenwasserstoff-Treibstoffe, wie Ethanol, oder synthetischem Brennstoff, wie Ammoniak oder Wasserstoff, betrieben wird, ausgeglichen wird.

7. Verfahren nach Anspruch 1, wobei das Metallammin-Salz ein Salz der allgemeinen Formel: Mₐ(NH₃)ₙX_{z} ist, in der M für ein oder mehrere Kationen steht, die aus Alkalimetallen, wie Li, Na, K oder Cs, Erdalkalimetallen, wie Mg, Ca oder Sr, und/oder Übergangsmetallen, wie V, Cr, Mn, Fe, Co, Ni, Cu oder Zn, oder deren Kombinationen, wie NaAl, KAl, K₂Zn, CsCu oder K₂Fe, ausgewählt ist, X für ein oder mehrere Anionen steht, die aus Fluorid-, Chlorid-, Bromid-, lodid-, Nitrat-, Thiocyanat-, Sulfat-, Molybdat- und Phosphat-Ionen ausgewählt sind, a die Zahl der Kationen pro Salzmolekül ist, z die Zahl der Anionen pro Salzmolekül ist, und n die Koordinationszahl von 2 bis 12 ist.

8. Verfahren nach Anspruch 7, bei dem das ionische Salz MgCl₂, CaCl₂, SrCl₂ oder deren Mischungen ist.

9. Verfahren nach irgendeinem der Ansprüche 1 - 9, bei dem das gesättigte ammoniakhaltige Metallamin-Salz in fester Form zu einem bzw. einer dichten Block, Stab, Zylinder, Ring oder Einheit mit Kanten, wie einem Würfel, mit einer Dichte über 70 % der theoretischen maximalen Gerüstdichte des gesättigten festen Metallammin-Salzes kompaktiert vorliegt, bevor es in den Behälter gegeben wird.

10. Verfahren nach irgendeinem der Ansprüche 1 - 9, bei dem die Freisetzungsgeschwindigkeit von Ammoniak durch das eingestellte Vakuumniveau innerhalb des Behälters bestimmt wird, welches wiederum durch die Vakuumpumpe gesteuert wird.

11. Verfahren nach irgendeinem der Ansprüche 1 - 10, bei dem die Zufuhr von Ammoniak weiter durch Reduktionsventile, Durchflussregler, Ventile oder eine ähnliche Art von Ausrüstung gesteuert wird.

12. Verfahren nach Anspruch 1, bei dem das freigesetzte Ammoniak in einer selektiven katalytischen Reduktion von NOx (9) in Abgasen (8) aus Verbrennungsprozessen in stationären und mobilen Verbrennungsmotoren, welche mit Diesel, Benzin, Naturgas oder irgendwelchen anderen fossilen Brennstoffen oder mit Methanol, Ethanol, Wasserstoff, Methan, Ethan oder irgendwelchen anderen bio- oder synthetischen Brennstoffen, wie Ammoniak und Wasserstoff, betrieben werden, oder in stationären oder mobilen Kraftwerken, die mit Kohle, Naturgas, Öl oder irgendwelchen anderen fossilen Brennstoffen betrieben werden, verwendet wird.

13. Vorrichtung zur Bereitstellung von Ammoniak gemäß dem Verfahren nach Anspruch 1 für die selektive katalytische Reduktion von NOx (9) in einem sauerstoffhaltigen Abgas eines Verbrennungsmotors oder eines Verbrennungsprozesses durch Verwendung von gasförmigem Ammoniak und einem Reduktionskatalysator, wobei die Vorrichtung umfasst:
(a) einen Behälter (1) mit einem festen Metallammin-Salz, das absorbiertes Ammoniak enthält und Ammoniak durch Binden von Ammoniak mittels Absorption bzw. erzwungenes Desorbieren von Ammoniak durch Verringerung des Drucks speichern/liefern kann;
(b) eine Vakuumpumpe (2) zur Erzeugung eines verringerten Drucks von Gasphasen-Ammoniak in dem Behälter, welcher unterhalb des entsprechenden Ammoniak-Gleichgewichtdrucks des Festkörpers bei der Betriebstemperatur des Behälters (1) liegt, wodurch Ammoniakfreisetzung mittels Desorption bewirkt wird,
(c) fakultative Mittel (7) zum Heizen des Inhalts des Behälters, um den Temperaturabfall zu kompensieren, der durch den Ammoniak-Desorptionsprozess verursacht wird, wodurch eine gewünschte Betriebstemperatur beibehalten wird;
**dadurch gekennzeichnet, dass** die Vorrichtung weiter umfasst:
(d) Mittel (4) zum Einführen von gasförmigem Ammoniak aus dem Behälter (1) in ein Abgas (8);
(e) einen Katalysator zur Reduktion von NOx (9) durch Reaktion mit dem zudosierten Ammoniak und
(f) Mittel (6) zum Steuern der Ammoniakmenge, die in die Abgasleitung
(f1) eines Motors in Abhängigkeit von den Betriebsbedingungen des Motors und zum Erzielen eines optimalen Verhältnisses zwischen NOx und Ammoniak, um eine hohe NOx-Umwandlung zu erzielen, während ein Ammoniakauslecken aus dem Gas nach dem Katalysator minimiert wird, oder
(f2) von stationären oder mobilen Kraftwerken, die Elektrizität erzeugen, eingeführt wird.

14. Vorrichtung nach Anspruch 13 zur Verwendung zur Reduktion von NOx (9) gemäß dem Verfahren nach Anspruch 1, wobei der Motor in Automobilen, Lastwagen, Zügen, Schiffen oder irgendeiner anderen motorisierten Maschine vorliegt.

15. Verwendung einer Vakuumpumpe (2) zur Durchführung des Verfahrens nach Anspruch 1.

16. Verwendung nach Anspruch 15, bei der Wärme für den Speicherbehälter (1) bereitgestellt wird, um den Temperaturabfall zu kompensieren, der durch den Ammoniak-Desorptionsprozess verursacht wird, wodurch der Behälter (1) bei einer gewünschten Betriebstemperatur gehalten wird.

17. Verwendung nach Anspruch 15 oder 16, bei der das freigesetzte Ammoniak als Brennstoff in einer mit Ammoniak betriebenen Brennstoffzelle (10, 12) verwendet wird.

18. Verwendung nach Anspruch 15 oder 16, bei der das freigesetzte Ammoniak in einen Ammoniak-Zersetzungsreaktor (11) eingespeist wird, in dem das Ammoniak in Stickstoff und Wasserstoff zersetzt wird, und zumindest der Wasserstoff als Brennstoff in einer mit Wasserstoff betriebenen Brennstoffzelle (10, 12) verwendet wird.

## Revendications

1. Procédé de fourniture contrôlée d'ammoniac à l'aide de vide, dans lequel ledit procédé comprend les étapes consistant à :
(a) prévoir un récipient (1) ;
(b) placer, dans ledit récipient (1), un sel d'amine de métal solide contenant de l'ammoniac absorbé et étant capable de stocker/délivrer de l'ammoniac en liant l'ammoniac par absorption et en désorbant de force l'ammoniac en réduisant la pression, respectivement ; et
(c) effectuer la libération de l'ammoniac par désorption, à l'aide d'une pompe à vide (2) pour atteindre une pression d'ammoniac en phase gazeuse dans ledit récipient (1), qui est inférieure à la pression d'ammoniac d'équilibre thermodynamique correspondante du solide à la température de fonctionnement du récipient (1) ;
**caractérisé par** l'une quelconque des étapes suivantes :
utiliser l'ammoniac libéré pour une réduction catalytique sélective des NOx (9) dans les gaz d'échappement (8) provenant des processus de combustion, ou
amener l'ammoniac libéré à une pile à combustible alimentée en ammoniac en tant que combustible ou à un réacteur de décomposition d'ammoniac (11), dans lequel l'ammoniac est décomposé en azote et en hydrogène, et au moins l'hydrogène alimente une pile à combustible alimentée en hydrogène (10, 12) en tant que combustible.

2. Procédé selon la revendication 1, dans lequel le sel d'amine de métal contenant l'ammoniac est saturé en ammoniac.

3. Procédé selon les revendications 1 ou 2, dans lequel l'effet de refroidissement du procédé de désorption d'ammoniac est équilibré en amenant de la chaleur au contenu du récipient (1).

4. Procédé selon l'une quelconque des revendications 1 à 3, dans lequel la chute de température du sel d'amine de métal provoquée par le processus de désorption d'ammoniac est équilibrée en amenant de la chaleur provenant d'un dispositif de chauffage à résistance électrique (7) ou de la chaleur provenant d'un processus chimique.

5. Procédé selon l'une quelconque des revendications 1 à 3, dans lequel la chute de température du sel d'amine de métal provoquée par le processus de désorption de l'ammoniac est équilibrée en fournissant de la chaleur sous forme de chaleur résiduelle provenant d'un gaz d'échappement d'un processus de combustion.

6. Procédé selon la revendication 5, dans lequel la chute de température du sel d'amine de métal provoquée par le processus de désorption de l'ammoniac est équilibrée en fournissant de la chaleur provenant du gaz d'échappement d'une unité d'automobile fonctionnant avec de l'essence, du diesel ou d'autres combustibles hydrocarbures tels que l'éthanol ou un combustible synthétique tel que l'ammoniac ou l'hydrogène.

7. Procédé selon la revendication 1, dans lequel le sel d'amine de métal est un sel de la formule générale : Mₐ(NH₃)ₙX_{z}, dans lequel M est un ou plusieurs cations choisis parmi des métaux alcalins tels que Li, Na, K ou Cs, des métaux alcalins de terres rares tels que Mg, Ca ou Sr et/ou des métaux de transition tels que V, Cr, Mn, Fe, Co, Ni, Cu ou Zn ou leurs combinaisons telles que NaAl, KAl, K₂Zn, CsCu ou K₂Fe, X est un ou plusieurs anions choisis parmi les ions de fluorure, de chlorure, de bromure, d'iodure, de nitrate, de sulfocyanate, de sulfate, de molybdate ou de phosphate, a est le nombre de cations par molécule de sel, z est le nombre d'anions par molécule de sel, et n est le nombre de coordinations de 2 à 12.

8. Procédé selon la revendication 7, dans lequel le sel ionique est MgCl₂, CaCl₂, SrCl₂ ou leurs mélanges.

9. Procédé selon l'une quelconque des revendications 1 à 9, dans lequel le sel d'amine de métal contenant l'ammoniac saturé se présente sous une forme solide compactée en un bloc dense, une tige, un cylindre, une bague ou une unité à bord telle qu'un cube avec une densité supérieure à 70 % de la densité de base maximum théorique du sel d'amine de métal solide saturé avant de le placer dans le récipient.

10. Procédé selon l'une quelconque des revendications 1 à 9, dans lequel le taux libéré d'ammoniac est déterminé par le niveau établi de vide à l'intérieur du récipient qui, à son tour, est contrôlé par la pompe à vide.

11. Procédé selon l'une quelconque des revendications 1 à 10, dans lequel la distribution d'ammoniac est en outre contrôlée par des soupapes de réduction, des contrôleurs de débit, des soupapes ou un type similaire d'équipement.

12. Procédé selon la revendication 1, dans lequel l'ammoniac libéré est utilisé pour la réduction catalytique sélective des NOₓ (9) dans les gaz d'échappement (8) provenant des processus de combustion dans des moteurs à combustion fixe et mobile alimentés en diesel, essence, gaz naturel ou n'importe quel autre combustible fossile ou le méthanol, l'éthanol, l'hydrogène, le méthane, l'éthane ou n'importe quel autre biocombustible ou combustible synthétique tel que l'ammoniac et l'hydrogène, ou dans des centrales électriques fixes ou mobiles alimentées avec du charbon, du gaz naturel, du pétrole ou n'importe quel autre combustible fossile.

13. Dispositif pour fournir de l'ammoniac selon le procédé de la revendication 1, pour une réduction catalytique sélective des NOx (9) dans un gaz d'échappement contenant de l'oxygène d'un moteur à combustion ou processus de combustion en utilisant de l'ammoniac gazeux et un catalyseur de réduction, ledit dispositif comprenant :
(a) un récipient (1) avec un sel d'amine de métal solide contenant de l'ammoniac absorbé et étant capable de stocker/délivrer de l'ammoniac en liant l'ammoniac par absorption et en désorbant de force l'ammoniac en réduisant la pression, respectivement ;
(b) une pompe à vide (2) pour générer une pression réduite de l'ammoniac en phase gazeuse dans le récipient, qui est inférieure à la pression d'équilibre de l'ammoniac correspondante du solide à la température de fonctionnement (1) du récipient, effectuant ainsi la libération de l'ammoniac par désorption ;
(c) des moyens facultatifs (7) pour chauffer le contenu du récipient afin de compenser la chute de température provoquée par le processus de désorption de l'ammoniac tout en conservant une température de fonctionnement souhaitée ;
**caractérisé en ce que** le dispositif comprend en outre :
(d) des moyens (4) pour introduire de l'ammoniac gazeux du récipient (1) dans un gaz d'échappement (8) ;
(e) un catalyseur pour réduire les NOx (9) par réaction avec de l'ammoniac dosé, et
(f) des moyens pour contrôler (6) la quantité d'ammoniac introduite dans la conduite d'échappement
(f1) d'un moteur, en fonction des conditions de fonctionnement du moteur, et pour donner un rapport optimal entre les NOx et l'ammoniac afin d'obtenir une conversion de NOx élevée tout en minimisant le glissement de l'ammoniac provenant du gaz en aval du catalyseur, ou
(f2) des centrales fixes ou mobiles générant de l'électricité.

14. Dispositif selon la revendication 13 destiné à être utilisé pour la réduction des NOx (9) selon le procédé de la revendication 1, dans lequel le moteur est présent dans les voitures, les camions, les trains, les bateaux ou n'importe quelle autre machine motorisée.

15. Utilisation d'une pompe à vide (2) pour réaliser le procédé selon la revendication 1.

16. Utilisation selon la revendication 15, dans lequel la chaleur est amenée audit récipient de stockage (1) afin de compenser la chute de température provoquée par le processus de désorption de l'ammoniac, maintenant ainsi le récipient (1) à une température de fonctionnement souhaitée.

17. Utilisation selon la revendication 15 ou 16, dans laquelle l'ammoniac libéré est utilisé en tant que combustible dans une pile à combustible alimentée en ammoniac (10, 12).

18. Utilisation selon la revendication 15 ou 16, dans laquelle l'ammoniac libéré est amené à un réacteur de décomposition de l'ammoniac (11), dans laquelle l'ammoniac est décomposé en azote et en hydrogène, et au moins l'hydrogène est utilisé en tant que combustible dans une pile à combustible alimentée en hydrogène (10, 12).
